# EUROPEAN PATENT APPLICATION

(11) **EP 4 235 210 A1**
(43) Date of publication of application: **30.08.2023**
(21) Application number: 21885826.4
(22) Date of filing: 04.10.2021
(51) Int. Cl.: G01S 7/36

(54) **ELECTRONIC APPARATUS, INFORMATION PROCESSING DEVICE, METHODS FOR CONTROLLING THESE, AND PROGRAM**

(30) Priority: 26.10.2020 JP 2020179255
(71) Applicant: Kyocera Corporation, Kyoto-shi Kyoto 612-8501 (JP)
(72) Inventor: NISHIKIDO Masamitsu, Kyoto-shi, Kyoto 612-8501 (JP); SATO Masayuki, Kyoto-shi, Kyoto 612-8501 (JP); KAWAJI Satoshi, Kyoto-shi, Kyoto 612-8501 (JP); MURAKAMI Youhei, Kyoto-shi, Kyoto 612-8501 (JP)
(74) Representative: Viering, Jentschura & Partner mbB Patent- und Rechtsanwälte
(86) International application number: PCT/JP2021/036661
(87) International publication number: WO 2022/091707

(57) **Abstract**

An electronic device includes a transmission antenna and a reception antenna. The transmission antenna is configured to transmit a transmission wave. The reception antenna is configured to receive a reflection wave generated by reflection of the transmission wave. The electronic device allows the frequency at which the transmission wave is transmitted to be variable in multiple segments and detects an object that reflects the transmission wave based on a transmission signal transmitted as the transmission wave and a reception signal received as the reflection wave. The electronic device transmits sensing information to an information processing apparatus along with position information of the electronic device. The sensing information is based on the transmission signal transmitted at a frequency in one of the multiple segments as the transmission wave and the reception signal received as the reflection wave.

## Description

### CROSS-REFERENCE TO RELATED APPLICATIONS

This application claims priority of Japanese Patent Application No. 2020-179255 filed in Japan on October 26, 2020, the entire disclosure of which is hereby incorporated by reference.

### TECHNICAL FIELD

The present disclosure relates to an electronic device, an information processing apparatus, control methods therefor, and programs.

### BACKGROUND OF INVENTION

For example, in fields such as industries related to automobiles, technologies for measuring the distance between a host vehicle and a prescribed object and so forth are becoming increasingly important. In particular, in recent years, various studies have been conducted on radar (radio detecting and ranging ((RADAR)) technologies. In these technologies, the distance to an object is measured by transmitting radio waves, such as millimeter waves, and receiving waves reflected from an object, such as an obstacle. The importance of such technologies for measuring distances so forth is expected to further increase in the future with the development of technologies for assisting drivers in driving and technologies related to automated driving that allow part or all of the driving process to be automated.

As technologies for detecting objects by transmitting and receiving radio waves as described above become more widely used, it is assumed that the performance of each device in detecting objects may be weakened due to interference from the radio waves transmitted by numerous other devices. A number of possible solutions have been proposed that could address this situation. For example, Patent Literature 1 proposes a technology in which radio wave interference is avoided by halting the transmission or reception of the radar device of the host device when interference occurs due to the angle between the antennas of the radar of the host device and another radar. Furthermore, Patent Literature 2 proposes a technology in which radio wave interference is avoided by sharing information between multiple radars and setting different frequency hopping patterns for the multiple radars.

### CITATION LIST

### PATENT LITERATURE

Patent Literature 1: Japanese Unexamined Patent Application Publication No. 2002-156442
Patent Literature 2: Japanese Unexamined Patent Application Publication No. 2005-195450

### SUMMARY

In an embodiment, an electronic device includes a transmission antenna and a reception antenna.

The transmission antenna is configured to transmit a transmission wave.

The reception antenna is configured to receive a reflection wave generated by reflection of the transmission wave.

The electronic device allows a frequency at which the transmission wave is transmitted to be variable in multiple segments and detects an object that reflects the transmission wave based on a transmission signal transmitted as the transmission wave and a reception signal received as the reflection wave.

The electronic device transmits sensing information to an information processing apparatus along with position information of the electronic device. The sensing information is based on the transmission signal transmitted at a frequency in any of the multiple segments as the transmission wave and the reception signal received as the reflection wave.

In an embodiment, an electronic device includes a transmission antenna and a reception antenna.

The transmission antenna is configured to transmit a transmission wave.

The reception antenna is configured to receive a reflection wave generated by reflection of the transmission wave.

The electronic device allows a frequency at which the transmission wave is transmitted to be variable in multiple segments and detects an object that reflects the transmission wave based on a transmission signal transmitted as the transmission wave and a reception signal received as the reflection wave.

The electronic device transmits the transmission wave from the transmission antenna at a frequency based on control information received from an information processing apparatus.

In an embodiment, an information processing apparatus is configured to communicate with an electronic device.

The electronic device is configured to detect an object that reflects a transmission wave based on a transmission signal transmitted as the transmission wave and a reception signal received as a reflection wave generated by reflection of the transmission wave.

The information processing apparatus includes a receiver, a controller, and a transmitter.

The receiver is configured to receive sensing information together with position information of the electronic device from the electronic device. The sensing information is based on the transmission signal transmitted as the transmission wave and the reception signal received as the reflection wave.

The controller is configured to generate statistical information by performing statistical processing on the sensing information at a position of the electronic device and generate, in accordance with the statistical information, control information with which the electronic device is controlled.

The transmitter is configured to transmit the control information generated by the controller to the electronic device.

In an embodiment, an electronic device control method includes:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting, together with position information of the electronic device, sensing information based on the transmission signal transmitted at a frequency in any of the multiple segments as the transmission wave and the reception signal received as the reflection wave to an information processing apparatus.

In an embodiment, an electronic device control method includes:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting the transmission wave from the transmission antenna at a frequency based on control information received from an information processing apparatus.

In an embodiment, a method of controlling an information processing apparatus is provided. The information processing apparatus is configured to communicate with an electronic device. The electronic device is configured to detect an object that reflects a transmission wave based on a transmission signal transmitted as the transmission wave and a reception signal received as a reflection wave generated by reflection of the transmission wave.

The method includes:
receiving, together with position information of the electronic device, sensing information based on the transmission signal transmitted as the transmission wave and the reception signal received as the reflection wave from the electronic device;
generating statistical information by performing statistical processing on the sensing information at a position of the electronic device and generating, in accordance with the statistical information, control information with which the electronic device is controlled; and
transmitting the control information generated by the controller to the electronic device.

In an embodiment, a program is configured to cause an electronic device to perform:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave based on a transmission signal transmitted as the transmission wave and a reception signal received as the reflection wave; and
transmitting, together with position information of the electronic device, sensing information based on the transmission signal transmitted at a frequency in any of the multiple segments as the transmission wave and the reception signal received as the reflection wave to an information processing apparatus.

In an embodiment, a program is configured to cause an electronic device to perform:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting the transmission wave from the transmission antenna at a frequency based on control information received from an information processing apparatus.

In an embodiment, a program is provided for an information processing apparatus.

The information processing apparatus is configured to communicate with an electronic device.

The electronic device is configured to detect an object that reflects a transmission wave based on a transmission signal transmitted as the transmission wave and a reception signal received as a reflection wave generated by reflection of the transmission wave.

The program is configured to cause the information processing apparatus to perform:
receiving sensing information based on the transmission signal transmitted as the transmission wave and the reception signal received as the reflection wave from the electronic device, together with position information of the electronic device;
generating statistical information by performing statistical processing on the sensing information at a position of the electronic device and generating, in accordance with the statistical information, control information with which the electronic device is controlled; and
transmitting the control information generated by the controller to the electronic device.

### BRIEF DESCRIPTION OF THE DRAWINGS

FIG. 1 is a diagram for explaining the way in which an electronic device according to an embodiment is used.
FIG. 2 is a functional block diagram schematically illustrating the configuration of the electronic device according to the embodiment.
FIG. 3 is a functional block diagram schematically illustrating the configuration of the electronic device according to the embodiment.
FIG. 4 is a diagram schematically illustrating the configuration of a system according to an embodiment.
FIG. 5 is functional block diagram schematically illustrating the configuration of an information processing apparatus according to an embodiment.
FIG. 6 is a flowchart for describing operation of the electronic device according to the embodiment.
FIG. 7 is a flowchart for describing operation of the information processing apparatus according to the embodiment.
FIG. 8 is a diagram illustrating an example of noise power based on sensing information received by the information processing apparatus according to the embodiment.
FIG. 9 is a flowchart for describing operation of the electronic device according to the embodiment.

### DESCRIPTION OF EMBODIMENTS

In a technology for detecting a prescribed object by receiving a reflection wave generated by a transmitted transmission wave being reflected off the object, it is desirable to reduce interference for the transmission wave. An object of the present disclosure is to provide an electronic device, an information processing apparatus, control methods therefor, and programs that are capable of reducing interference for a transmission wave in a technology in which a prescribed object is detected by receiving a reflection wave generated by a transmitted transmission wave being reflected off the object. According to an embodiment, there can be provided an electronic device, an information processing apparatus, control methods therefor, and programs that are capable of reducing interference for a transmission wave in a technology in which a prescribed object is detected by receiving a reflection wave generated by a transmitted transmission wave being reflected off the object. Hereafter, an embodiment will be described in detail while referring to the drawings.

An electronic device according to an embodiment is mounted in a vehicle (mobile object) such as an automobile and is capable of detecting a prescribed object located in the surroundings of the mobile object. Accordingly, the electronic device according to the embodiment can transmit a transmission wave into the surroundings of the mobile object from a transmission antenna installed in the mobile object. In addition, the electronic device according to the embodiment can receive a reflection wave from a reception antenna installed in the mobile object, the reflection wave being generated by the transmission wave being reflected. At least one out of the transmission antenna and the reception antenna may be, for example, provided in a radar sensor or the like installed in the mobile object.

Hereinafter, as a typical example, a configuration will be described in which the electronic device according to the embodiment is mounted in an automobile such as a passenger vehicle. However, the electronic device according to the embodiment is not limited to being mounted in an automobile. The electronic device of the embodiment may be mounted in any of a variety of mobile objects such as self-driving cars, buses, taxis, trucks, motorcycles, bicycles, ships, aircraft, helicopters, agricultural equipment such as tractors, snowplows, sweepers, police cars, ambulances, and drones. Furthermore, the electronic device according to the embodiment is not necessarily limited to being mounted in mobile objects that move under their own power. For example, the mobile object in which the electronic device according to the embodiment is mounted may be a trailer part towed by a tractor. The electronic device according to the embodiment can measure the distance or the like between a sensor and a prescribed object in a situation where at least one out of the sensor and the object can move. The electronic device according to the embodiment can measure the distance or the like between the sensor and the object even when both the sensor and the object are stationary.

Automobiles included in the present disclosure are not limited in terms of overall length, width, height, displacement, capacity, or load capacity. For example, automobiles of the present disclosure include automobiles having a displacement greater than 660 cc, and automobiles having a displacement less than or equal to 660 cc, i.e., so-called light automobiles. The automobiles included in the present disclosure are not limited to so-called gasoline-powered vehicles. Automobiles of the present disclosure also include automobiles that use electricity as part or all of their energy and are powered by motors.

First, an example of detection of an object performed by the electronic device according to the embodiment will be described.

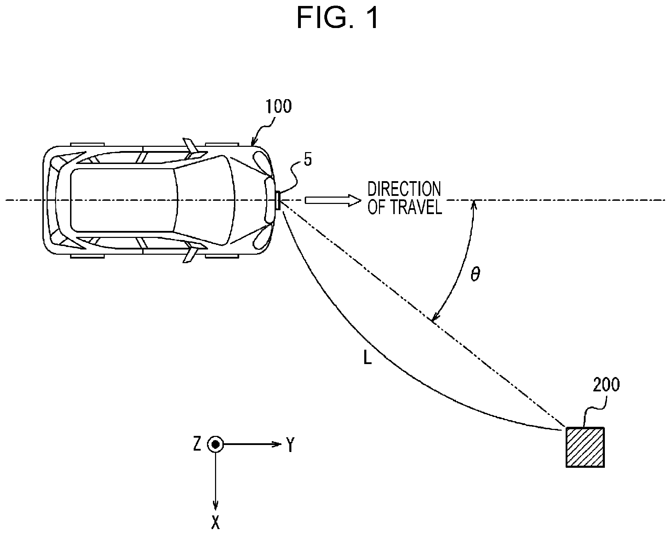

FIG. 1 is a diagram for explaining the way in which the electronic device according to the embodiment is used. FIG. 1 illustrates an example in which a sensor according to an embodiment is installed in a mobile object, the sensor being equipped with a transmission antenna and a reception antenna.

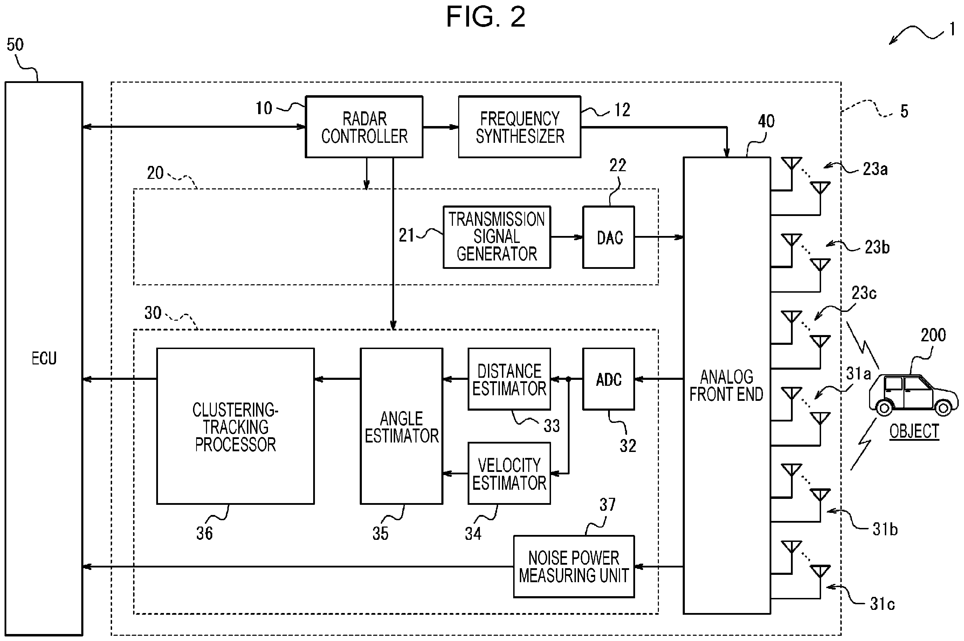

A sensor 5 according to an embodiment is installed in a mobile object 100 illustrated in FIG. 1. The sensor 5 includes a transmission antenna and a reception antenna. An electronic device 1 according to the embodiment may be mounted in (for example, built into) the mobile object 100 illustrated in FIG. 1. The specific configuration of the electronic device 1 will be described below. The sensor 5 may include at least one out of a transmission antenna and a reception antenna, for example. The sensor 5 may include at least one of other functional components such as at least part of a radar controller 10 (FIG. 2) included in the electronic device 1, as appropriate. The mobile object 100 illustrated in FIG. 1 may be a vehicle such as an automobile like a passenger car, but may be any suitable type of mobile object. In FIG. 1, the mobile object 100 may, for example, be moving (traveling or slowing down) in the positive Y-axis direction (direction of travel) indicated in the figure, may be moving in another direction, or may be stationary and not moving.

As illustrated in FIG. 1, the sensor 5 including a transmission antenna is installed in the mobile object 100. In the example illustrated in FIG. 1, only one sensor 5, which includes a transmission antenna and a reception antenna, is installed at the front of the mobile object 100. The position at which the sensor 5 is installed on or in the mobile object 100 is not limited to the position illustrated in FIG. 1, and may be another position, as appropriate. For example, the sensor 5 illustrated in FIG. 1 may be installed at the left side, the right side, and/or the rear of the mobile object 100. The number of sensors 5 may be any suitable number of one or more depending on various conditions (or requirements) such as the range and/or accuracy of measurement in the mobile object 100. The sensor 5 may be installed inside the mobile object 100. The inside of the mobile object 100 may be, for example, the space inside a bumper, the space inside the body, the space inside a headlight, or the driver's space.

The sensor 5 transmits an electromagnetic wave as a transmission wave from the transmission antenna. For example, when there is a prescribed object (for example, an object 200 illustrated in FIG. 1) in the surroundings of the mobile object 100, at least part of a transmission wave transmitted from the sensor 5 will be reflected by the object and become a reflection wave. The reflection wave is, for example, received by the reception antenna of the sensor 5, and in this way, the electronic device 1 installed in the mobile object 100 is able to detect the object.

The sensor 5 including the transmission antenna may typically be a radar (radio detecting and ranging (RADAR)) sensor that transmits and receives radio waves. However, the sensor 5 is not limited to being a radar sensor. The sensor 5 according to the embodiment may be a sensor based on light detection and ranging or laser imaging detection and ranging (LIDAR) technologies utilizing light waves. These kind of sensors may include patch antennas, for example. Since technologies such as RADAR and LIDAR are already well known, detailed description thereof may be simplified or omitted as appropriate.

The electronic device 1 installed in the mobile object 100 illustrated in FIG. 1 receives, from the reception antenna, a reflection wave generated from a transmission wave transmitted from the transmission antenna of the sensor 5. In this way, the electronic device 1 can detect the prescribed object 200 located within a prescribed distance from the mobile object 100. For example, as illustrated in FIG. 1, the electronic device 1 can measure a distance L between the mobile object 100, which is the host vehicle, and the prescribed object 200. The electronic device 1 can also measure the relative velocity of the mobile object 100, which is the host vehicle, and the prescribed object 200. The electronic device 1 can also measure the direction (arrival angle 0) in which the reflection wave reflected from the prescribed object 200 arrives at the mobile object 100, which is the host vehicle. Hereafter, the angle at which a signal such as a reflection wave from the object 200 arrives at the host device will also be referred to as an "arrival angle".

The object 200 may be at least one out of, for example, an oncoming vehicle traveling in a lane adjacent to the mobile object 100, a car traveling next to the mobile object 100, and vehicles in front of and behind and traveling in the same lane as the mobile object 100. The object 200 may be any object that exists around the mobile object 100 such as a motorcycle, a bicycle, a stroller, a person such as a pedestrian, a living organism such as an animal or an insect, a guardrail, a median strip, a road sign, a sidewalk step, a wall, a manhole, or an obstacle. In addition, the object 200 may be in motion or stationary. For example, the object 200 may be an automobile that is parked or stationary in the surroundings of the mobile object 100.

In FIG. 1, the ratio of the size of the sensor 5 to the size of the mobile object 100 does not necessarily represent the actual ratio. In FIG. 1, a state is illustrated in which the sensor 5 is installed on the outside of the mobile object 100. However, in an embodiment, the sensor 5 may be installed at any of various positions on or in the mobile object 100. For example, in an embodiment, the sensor 5 may be installed inside a bumper of the mobile object 100 so that the sensor 5 does not appear outside the mobile object 100.

Next, in order to describe the electronic device 1 according to the embodiment in more detail, the current state of the art based on a general millimeter-wave radar system will be described.

For example, in industries such as the automotive industry, advanced driver assistance systems (ADAS), such as automatic braking systems, are becoming ever more widely used, and sensing technologies are attracting ever more attention. Therefore, there is a growing demand for sensors such as millimeter-wave radar that are fast, accurate, and reliable, but less expensive. Among such sensors, devices that detect obstacles around a vehicle are required to accurately measure the distance to the obstacle and the direction of the obstacle with a high degree of reliability in the range where an obstacle needs to be detected. Millimeter-wave radar is often used as such a sensor.

In recent years, it has become possible to use multiple frequency bands for in-vehicle radar. Specifically, the 24 GHz band, the 77 GHz band, and the 79 GHz band are frequency bands that are already in use. In addition, the 140 GHz band is being considered, taking international cooperation into consideration, by frequency allocation authorities as a frequency band that is anticipated to be used in the future. The frequency allocation authorities are the Ministry of Internal Affairs and Communications (MIC) in Japan and the International Telecommunication Union (ITU) Radiocommunication Sector (ITU-R) worldwide.

As a ranging method based on the millimeter-wave radar technology described above, a frequency modulated continuous wave radar (FMCW) method, in which the frequency of the transmitted radio waves is varied constantly with time, is widely used. However, as millimeter-wave radar-equipped systems become more widespread, the transmission signals of millimeter-wave radars installed in many automobiles and other vehicles are anticipated to interfere with each other. When such interference occurs, the accurate distance measurement and angle measurement performances of millimeter-wave radar are expected to be degraded. In the FMCW method, the greater the width of frequency variation (bandwidth of frequencies used), the better the distance and angle measurement performance. On the other hand, the wider the range over which the frequency is varied, the higher the risk that the transmission signals of different radars will cause radio wave interference with each other, resulting in degradation of performance. Therefore, the electronic device 1 according to the embodiment is described as a device that can deal with such a situation.

Hereinafter, as a typical example, the transmission antenna of the electronic device 1 according to the embodiment will be described as transmitting radio waves in a frequency band such as a millimeter wave band (greater than or equal to 30 GHz) or a quasi-millimeter wave band (for example, around 20 GHz to 30 GHz). For example, the transmission antenna of electronic device 1 may transmit radio waves with a frequency bandwidth of 4 GHz, such as from 77 GHz to 81 GHz. For example, the transmission antenna of the electronic device 1 may transmit radio waves with a frequency bandwidth of at least any one of a 24 GHz band, a 77 GHz band, a 79 GHz band, and a 140 GHz band.

FIG. 2 is a functional block diagram schematically illustrating an example configuration of the electronic device 1 according to the embodiment. As described later, the electronic device 1 according to the embodiment may support the transmission and reception of radio waves of multiple frequency bands. Hereafter, an example of the configuration of the electronic device 1 according to the embodiment will be described.

Frequency-modulated continuous wave radar (hereinafter referred to as FMCW radar) is often used to measure distances using millimeter-wave radar. In FMCW radar, the transmission signal is generated by sweeping the frequency of the radio waves to be transmitted. Therefore, for example, in a millimeter-wave FMCW radar that uses radio waves in the 79 GHz frequency band, the frequency of the radio waves being used will have a frequency bandwidth of 4 GHz, for example, from 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands. Hereafter, as an example, an embodiment will be described in which the transmission antenna of the electronic device 1 transmits radio waves with a frequency bandwidth of at least any one of a 24 GHz band, a 77 GHz band, a 79 GHz band, and a 140 GHz band. In the following description, descriptions that would be the same as or similar to those for general millimeter-wave radar will be simplified or omitted as appropriate.

As illustrated in FIG. 2, the electronic device 1 according to the embodiment includes the sensor 5 and an electronic control unit (ECU) 50. The ECU 50 controls various operations of the mobile object 100, which is an automobile, for example. The ECU 50 may consist of at least one ECU.

As illustrated in FIG. 2, the electronic device 1 according to the embodiment may include the radar controller 10, a frequency synthesizer 12, a transmitter 20, a transmission antenna 23, a receiver 30, a reception antenna 31, and an analog front end 40. In the electronic device 1 according to the embodiment, the transmitter 20 may include a transmission signal generator 21 and a DAC 22. In the electronic device 1 according to the embodiment, the receiver 30 may include an ADC 32, a distance estimator 33, a velocity estimator 34, an angle estimator 35, a clustering-tracking processor 36, and a noise power measuring unit 37. The electronic device 1 according to the embodiment does not need to include all of the functional units illustrated in FIG. 2 and may include functional units other than those illustrated in FIG. 2. For example, the electronic device 1 according to the embodiment may include any suitable storage or the like that can be configured using a semiconductor memory or the like. The electronic device 1 illustrated in FIG. 2 may be configured using circuits that are basically the same as or similar to those used in general radars that use electromagnetic waves in the millimeter wave band or the like. However, in the electronic device 1 according to the embodiment, the control performed by the radar controller 10 and the operation performed by the noise power measuring unit 37 may be different from those of general radars of the related art.

As illustrated in FIG. 2, the electronic device 1 according to the embodiment may include multiple pairs of the transmission antenna 23 and the reception antenna 31 in order to support radio waves of multiple frequency bands. The sensor 5 of the electronic device 1 illustrated in FIG. 2 includes a transmission antenna 23a, a transmission antenna 23b, and a transmission antenna 23c. Similarly, the sensor 5 of the electronic device 1 illustrated in FIG. 2 includes a reception antenna 31a, a reception antenna 31b, and a reception antenna 31c. In this specification, when not particularly distinguishing between multiple transmission antennas such as the transmission antenna 23a, the transmission antenna 23b, and the transmission antenna 23c, the transmission antennas may be simply referred to as the "transmission antenna 23". Similarly, when not particularly distinguishing between multiple reception antennas such as the reception antenna 31a, the reception antenna 31b, and the reception antenna 31c, the reception antennas may be simply referred to as the "reception antenna 31".

The radar controller 10 illustrated in FIG. 2 can control overall operation of the electronic device 1 including control of each functional unit of the electronic device 1. The radar controller 10 may include at least one processor, such as a central processing unit (CPU) or a digital signal processor (DSP), in order to provide control and processing power to perform various functions. The radar controller 10 may be implemented collectively in a single processor, in several processors, or in individual processors. The processors may be implemented as a single integrated circuit. An integrated circuit may also be referred to as an IC. Processors may be implemented as multiple integrated circuits and discrete circuits connected so as to be able to communicate with each other. The processors may be realized based on various other known technologies. In the embodiment, the radar controller 10 may be configured, for example, as a CPU (hardware) and a program (software) executed by the CPU. The radar controller 10 may include any suitable storage that can be configured using a semiconductor memory or the like as a storage necessary for operation of the radar controller 10.

In the embodiment, the radar controller 10 determines the frequency of a transmission wave to be transmitted from the transmission antenna 23. The radar controller 10 may determine the frequency of the transmission wave to be transmitted from the transmission antenna 23 based on an instruction from the ECU 50. Operation of the radar controller 10 according to the embodiment will be further described later. The frequency of the transmission wave determined by the radar controller 10 is input to the frequency synthesizer 12. Therefore, the radar controller 10 may be connected to the frequency synthesizer 12. As illustrated in FIG. 2, the radar controller 10 may be connected to the ECU 50. As illustrated in FIG. 2, the radar controller 10 may be connected to the transmitter 20 and the receiver 30.

The frequency synthesizer 12 generates a carrier wave of the required frequency based on the frequency determined by the radar controller 10. The frequency synthesizer 12 may be based on a typical millimeter-wave radar technology, for example. A carrier wave signal generated by the frequency synthesizer 12 is supplied to the analog front end 40. Therefore, the frequency synthesizer 12 may be connected to the analog front end 40.

In the transmitter 20, the transmission signal generator 21 generates a signal to be transmitted from the electronic device 1 (transmission antenna 23). In the electronic device 1 according to the embodiment, the transmission signal generator 21 may generate a transmission signal such as a chirp signal (transmission chirp signal). In particular, the transmission signal generator 21 may generate a signal having a frequency that varies periodically and linearly (linear chirp signal). For example, the transmission signal generator 21 may generate a chirp signal (79 GHz band) whose frequency periodically and linearly increases from 77 GHz to 81 GHz over time. For example, the transmission signal generator 21 may generate a signal whose frequency periodically repeatedly linearly increases (up chirp) and decreases (down chirp) from 77 GHz to 81 GHz over time. The signal generated by the transmission signal generator 21 may be set in advance in the radar controller 10, for example. Since chirp signals used in technical fields such as radar are known, detailed description thereof will be simplified or omitted as appropriate. The signal generated by the transmission signal generator 21 is supplied to the DAC 22. Therefore, the transmission signal generator 21 may be connected to the DAC 22.

The digital-to-analog converter (DAC) 22 has a function of converting a digital signal supplied from the transmission signal generator 21 into an analog signal. The DAC 22 may include a general digital-to-analog converter. The signal generated by analog conversion by DAC 22 is supplied to the analog front end 40. Therefore, the DAC 22 may be connected to the analog front end 40.

The analog front end 40 generates a transmission wave to be transmitted from the electronic device 1 (transmission antenna 23) based on a transmission modulation wave generated by the transmitter 20 and a carrier wave signal generated by the frequency synthesizer 12. The analog front end 40 may be based on typical millimeter-wave radar technology, for example. The transmission wave generated by the analog front end 40 is supplied to the transmission antenna 23. Therefore, the analog front end 40 may be connected to the transmission antenna 23.

The transmission antenna 23 may be an antenna array in which multiple transmission antennas are arranged in an array pattern. In FIG. 2, the configuration of the transmission antenna 23 is illustrated in a simplified manner. The transmission antenna 23 transmits a signal supplied from the analog front end 40 to outside the electronic device 1. The transmission antenna 23 may include a transmission antenna array used in a typical millimeter-wave radar. In the electronic device 1 according to the embodiment, the transmission antenna 23a may be support transmission of radio waves in the 24 GHz band, for example. In the electronic device 1, the transmission antenna 23b may support transmission of radio waves in the 77 GHz or 79 GHz band, for example. In the electronic device 1, the transmission antenna 23c may support transmission of radio waves in the 140 GHz band, for example.

Thus, the electronic device 1 according to the embodiment includes the transmission antenna 23 and can transmit a transmission signal (for example, a transmission chirp signal) as a transmission wave from the transmission antenna 23.

For example, as illustrated in FIG. 2, a case in which the object 200 exists in the surroundings of the electronic device 1 is assumed. In this case, at least part of the transmission wave transmitted from the transmission antenna 23 is reflected by the object 200. At least part of the wave reflected by object 200 out of the transmission wave transmitted from the transmission antenna 23 can be reflected towards the reception antenna 31.

The reception antenna 31 receives the reflection wave. Here, the reflection wave may be at least part of the wave reflected by the object 200 out of the transmission wave transmitted from the transmission antenna 23.

The reception antenna 31 may be an antenna array in which multiple reception antennas are arranged in an array pattern. In FIG. 2, the configuration of the reception antenna 31 is illustrated in a simplified manner. The reception antenna 31 receives a reflection wave generated by the transmission wave transmitted from the transmission antenna 23 being reflected. The reception antenna 31 may include a reception antenna array used in a typical millimeter-wave radar. In the electronic device 1 according to the embodiment, the reception antenna 31a may be support reception of radio waves in the 24 GHz band, for example. In the electronic device 1, the reception antenna 3 1b may support reception of radio waves in the 77 GHz or 79 GHz band, for example. In the electronic device 1, the reception antenna 31c may support reception of radio waves in the 140 GHz band, for example. The reception antenna 31 supplies a reception signal received as a reflection wave to the analog front end 40. Therefore, the reception antenna 31 may be connected to the analog front end 40.

The above-described analog front end 40 generates a reception modulation signal based on the carrier wave signal generated by the frequency synthesizer 12 and the reflection wave received by the reception antenna 31. The reception modulation signal generated by the analog front end 40 is supplied to the ADC 32 and the noise power measuring unit 37. Therefore, the analog front end 40 may be connected to the ADC 32 and the noise power measuring unit 37 of the receiver 30.

The analog-to-digital converter (ADC) 32 has a function of converting an analog signal supplied from the analog front end 40 into a digital signal. The ADC 32 may include a general analog-to-digital converter. A signal generated by digital conversion performed by the ADC 32 is supplied to the distance estimator 33 and the velocity estimator 34. Therefore, the ADC 32 may be connected to the distance estimator 33 and the velocity estimator 34.

The distance estimator 33 calculates the distance from the electronic device 1 to the object 200 (distance measurement) based on a digital signal supplied from the ADC 32. The velocity estimator 34 calculates the relative velocity of the object 200 with respect to the electronic device 1 (velocity measurement) based on a digital signal supplied from the ADC 32. The result of distance estimation produced by the distance estimator 33 and the result of velocity estimation produced by the velocity estimator 34 may be supplied to the angle estimator 35. The angle estimator 35 calculates the azimuth angle (arrival angle) of the object 200 (angle measurement) as seen from the electronic device 1 based on the result of distance estimation produced by the distance estimator 33 and the result of velocity estimation produced by the velocity estimator 34. At least one out of the result of distance estimation produced by the distance estimator 33, the result of velocity estimation produced by the velocity estimator 34, and the result of angle estimation produced by the angle estimator 35 may be supplied to the clustering-tracking processor 36.

Specifically, the receiver 30 performs a fast Fourier transform in a distance (Range) direction and a velocity (Velocity) direction (2D-FFT), respectively, when I/Q transformed data is input thereto. After that, the receiver 30 suppresses false alarms and makes the probability of false alarms constant by removing noise points through, for example, universal asynchronous receiver transmitter (UART) and/or constant false alarm rate (CFAR) processing. The receiver 30 then obtains the position of the object 200 by, for example, performing arrival angle estimation for a point that satisfies the CFAR criteria. The information (sensing results) generated as a result of distance, velocity, and angle measurements carried out by the receiver 30 may be output to outside the electronic device 1. The estimation of distance, velocity, and angle in the electronic device 1 according to the embodiment may be based on, for example, general millimeter-wave radar technology.

The sensor 5 may include an interface that outputs the processing results (sensing results) produced by the clustering-tracking processor 36 to an external controller, for example. The clustering-tracking processor 36 may output information regarding at least one out of the position, velocity, and angle of the object 200 to outside the sensor 5 as a controller area network (CAN) signal, for example. The sensing results output from the electronic device 1 according to the embodiment may be supplied to the ECU 50, for example.

The ECU 50 of the electronic device 1 according to the embodiment can control overall operation of the mobile object 100 including control of each functional unit constituting the mobile object 100. The ECU 50 may include at least one processor, such as a central processing unit (CPU) for example, in order to provide control and processing power to perform various functions. The ECU 50 may be implemented collectively in a single processor, in several processors, or in individual processors. The processors may be implemented as a single integrated circuit. An integrated circuit may also be referred to as an IC. Processors may be implemented as multiple integrated circuits and discrete circuits connected so as to be able to communicate with each other. The processors may be realized based on various other known technologies. In the embodiment, the ECU 50 may be configured, for example, as a CPU (hardware) and a program (software) executed by the CPU. The ECU 50 may include, as appropriate, any suitable storage that can be configured using a semiconductor memory, for example. At least some of the functions of the radar controller 10 may be functions of the ECU 50, and at least some of the functions of the ECU 50 may be functions of the radar controller 10.

Thus, the electronic device 1 according to the embodiment may include the transmission antenna 23 that transmits a transmission wave and the reception antenna 31 that receives a reflection wave generated by the transmission wave being reflected. With this configuration, the electronic device 1 according to the embodiment may detect an object based on a transmission signal transmitted as a transmission wave and a reception signal received as a reflection wave.

The noise power measuring unit 37 measures the noise power of an analog signal supplied from the analog front end 40. In the embodiment, the noise power measuring unit 37 may measure the noise power of radio waves received by the reception antenna 31. For example, the noise power measuring unit 37 may measure the noise power of a signal received by the reception antenna 31 when a transmission wave is not being transmitted from the transmission antenna 23. In addition, for example, the noise power measuring unit 37 may measure the noise power of a signal received by the reception antenna 31 at a timing at which transmission of a transmission wave is not set in the frame of the transmission wave. Information about the noise power measured by the noise power measurement unit 37 may be supplied to the ECU 50, for example. Therefore, as illustrated in FIG. 2, the noise power measuring unit 37 may be connected to the ECU 50.

The sensor 5 illustrated in FIG. 2 may include three pairs of the transmission antenna 23 and the reception antenna 31. However, in the embodiment, the sensor 5 may include one pair of the transmission antenna 23 and the reception antenna 31, or any plural number of pairs of the transmission antenna 23 and the reception antenna 31, as described below.

Next, a configuration in which the electronic device 1 according to the embodiment is installed in the mobile object 100, which is an automobile, for example, will be described.

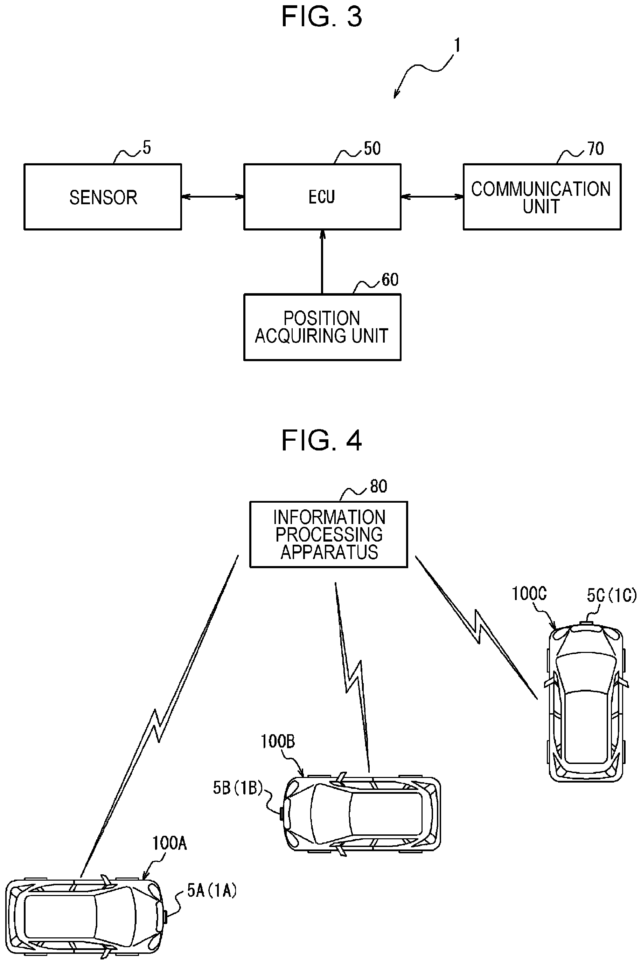

FIG. 3 is a functional block diagram schematically illustrating the configuration when the electronic device 1 according to the embodiment is installed in the mobile object 100, which is an automobile, for example. The electronic device 1 illustrated in FIG. 2 includes the sensor 5 and the ECU 50. The sensor 5 and the ECU 50 illustrated in FIG. 3 are the same as the sensor 5 and the ECU 50 illustrated in FIG. 2. As illustrated in FIG. 3, when the electronic device 1 is installed in the mobile object 100, which is an automobile, for example, the electronic device 1 may further include, in addition to the sensor 5 and the ECU 50 illustrated in FIG. 2, a position acquiring unit 60 and a communication unit 70.

The sensor 5 and the ECU 50 illustrated in FIG. 3 are as described in FIG. 2.

The position acquiring unit 60 acquires information regarding the position where the position acquiring unit 60 is located. The position where the position acquiring unit 60 is located may be, for example, the position of the sensor 5, the electronic device 1, or the mobile object 100, which is an automobile, for example. The position acquiring unit 60 may acquire position information based on global navigation satellite system (GNSS) technology, for example. GNSS technology may include any satellite positioning system such as the global positioning system (GPS), GLONASS, Galileo, and quasi-zenith satellite system (QZSS). The position acquiring unit 60 may be a position information acquiring device such as a GPS module. The position acquiring unit 60 is not limited to being a GPS module or the like, and may be configured using any device capable of acquiring information about positions.

The position information acquired by the position acquiring unit 60 may include, for example, at least one out of latitude, longitude, and altitude information. The position information acquired by the position acquiring unit 60 is supplied to the ECU 50. Based on the position information supplied from the position acquiring unit 60, the ECU 50 can determine the current position and so on of the electronic device 1 (or the sensor 5 or the mobile object 100).

The communication unit 70 is an interface for performing wired or wireless communication. The communication method used by the communication unit 70 in the embodiment may be a method defined by a wireless communication standard. For example, wireless communication standards include cellular phone communication standards such as 2G, 3G, 4G, and 5G. For example, cellular phone communication standards include long term evolution (LTE), wideband code division multiple access (W-CDMA), CDMA2000, personal digital cellular (PDC), global system for mobile communications (GSM) (registered trademark), and personal handy-phone system (PHS). For example, wireless communication standards include worldwide interoperability for microwave access (WiMAX), IEEE 802.11, Bluetooth (registered trademark), infrared data association (IrDA), and near field communication (NFC). The communication unit 70 can support one or a plurality of the above communication standards.

The communication unit 70 transmits and receives various types of data by performing wired and/or wireless communication with an information processing apparatus, such as an external server, for example. The communication performed by the communication unit 70 may be at least one out of transmitting and receiving various types of data. The communication unit 70 can, for example, transmit the position of the electronic device 1 acquired by the position acquiring unit 60 to an information processing apparatus such as an external server. The communication unit 70 can, for example, transmit at least any one of the various types of information detected by the sensor 5 to an information processing apparatus such as an external server. The communication unit 70 can also receive various types of information from an information processing apparatus such as an external server, for example.

Next, an example configuration of a system including the electronic device 1 according to the embodiment will be described.

FIG. 4 is a diagram schematically illustrating an example of the configuration of a system including the electronic device 1 according to the embodiment. As illustrated in FIG. 4, the system according to the embodiment includes the electronic device 1 and an information processing apparatus 80.

As illustrated in FIG. 4, an electronic device 1A including a sensor 5A is installed in a mobile object 100A. An electronic device 1B including a sensor 5B is installed in a mobile object 100B. An electronic device 1C including a sensor 5C is installed in a mobile object 100C. Hereafter, when not particularly distinguishing between the mobile object 100A, the mobile object 100B, and the mobile object 100C, the mobile objects will be simply referred to as the "mobile object 100". When not particularly distinguishing between the sensor 5A, the sensor 5B, and the sensor 5C, the sensors will be simply referred to as the "sensor 5". When not particularly distinguishing between the electronic device 1A, the electronic device 1B, and the electronic device 1C, the electronic devices will be simply referred to as the "electronic device 1". The electronic device 1 is the same as that described in FIGs. 2 and 3.

The system illustrated in FIG. 4 illustrates an example that includes three mobile objects 100. The electronic device 1 is installed in each mobile object 100. However, the system according to the embodiment may include at least one mobile object 100 in which the electronic device 1 is installed. As illustrated in FIG. 4, the electronic device 1 installed in each mobile object 100 can wirelessly communicate with the information processing apparatus 80. Through such communication, the electronic device 1 and the information processing apparatus 80 can exchange various types of data with each other.

The information processing apparatus 80 may be configured as any information processing apparatus (for example, a computer), such as various servers or cloud servers, as described below. The electronic device 1 and the information processing apparatus 80 may be connected to each other via a network for example. The system illustrated in FIG. 4 illustrates an example that includes only one information processing apparatus 80. However, the system according to the embodiment may include two or more information processing apparatuses 80. In this case, for example, the multiple information processing apparatuses 80 may communicate with each other in a wired or wireless manner.

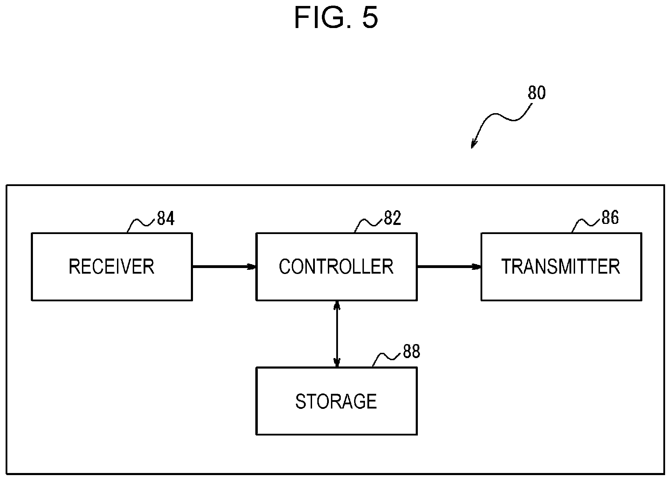

FIG. 5 is functional block diagram schematically illustrating the configuration of an information processing apparatus according to an embodiment. FIG. 5 illustrates in more detail the configuration of one example of the information processing apparatus 80 illustrated in FIG. 4.

As illustrated in FIG. 5, the information processing apparatus 80 includes a controller 82, a receiver 84, a transmitter 86, and a storage 88.

The controller 82 includes at least one processor that controls and/or manages the entirety of the information processing apparatus 80, including each functional block of the information processing apparatus 80. The controller 82 includes at least one processor, such as a CPU, that executes a program that defines control procedures in order to realize the functions thereof. This program is, for example, stored in the storage 88 or in an external storage medium connected to the information processing apparatus 80. Operation of the controller 82 according to the embodiment will be further described later.

The receiver 84 may be configured so as to be able to receive various types of information from other devices in a wired and/or wireless manner. For example, the receiver 84 may receive information based on the detection results produced by the sensor 5 of the electronic device 1 from the communication unit 70 of the electronic device 1 illustrated in FIG. 4. The receiver 84 may also receive various types of information from information processing apparatuses or the like other than the information processing apparatus 80.

The transmitter 86 may be configured so as to be able to transmit various types of information to other devices in a wired and/or wireless manner. For example, the transmitter 86 may transmit information based on the results of processing carried out by the controller 82 and/or information read out from the storage 88 to the communication unit 70 of the electronic device 1 illustrated in FIG. 4. The transmitter 86 may also transmit various types of information to information processing apparatuses or the like other than the information processing apparatus 80.

The receiver 84 and/or transmitter 86 are interfaces for performing wired or wireless communication. The communication method used by the receiver 84 and/or transmitter 86 in the embodiment may be a method defined by a wireless communication standard. For example, wireless communication standards include cellular phone communication standards such as 2G, 3G, 4G, and 5G. For example, cellular phone communication standards include long term evolution (LTE), wideband code division multiple access (W-CDMA), CDMA2000, personal digital cellular (PDC), global system for mobile communications (GSM) (registered trademark), and personal handy-phone system (PHS). For example, wireless communication standards include worldwide interoperability for microwave access (WiMAX), IEEE 802.11, Bluetooth (registered trademark), infrared data association (IrDA), and near field communication (NFC). The receiver 84 and/or transmitter 86 can support one or more of the above communication standards.

The storage 88 may store programs executed by the controller 82 and the results of processing performed by the controller 82. The storage 88 may function as a working memory of the controller 82. For example, the storage 88 can be configured using, but is not limited to, a semiconductor memory or a magnetic disk, but may be any suitable storage device. For example, the storage 88 may be a storage medium such as a memory card inserted into the electronic device 1 of this embodiment. The storage 88 may be the internal memory of a CPU used as the controller 82, as described above.

Next, operation of the electronic device 1 and the information processing apparatus 80 in the system according to the embodiment will be described.

As illustrated in FIG. 4, the electronic devices 1 according to the embodiment transmit information based on detection results produced by the sensors 5 installed in the respective mobile objects 100 traveling in different locations to the information processing apparatus 80. In other words, in the system according to the embodiment, information based on the results detected by the sensors 5 of the electronic devices 1 at different locations is aggregated in the information processing apparatus 80. The positions of the mobile objects 100 illustrated in FIG. 4 are schematic examples. The multiple mobile objects 100 may located at any positions and may be located close to each other or far away from each other. The multiple mobile objects 100 may be traveling at any velocity, or may be stationary or parked.

At least one of the electronic devices 1 illustrated in FIG. 4 may be capable of supporting multiple frequency bands (multiple segments of frequency), for example, the 24 GHz, 77 GHz, 79 GHz, and 140 GHz bands. Here, at least one of the electronic devices 1 illustrated in FIG. 4 may support all of the multiple frequency bands, for example, the 24 GHz, 77 GHz, 79 GHz, and 140 GHz bands, or at least two of the multiple frequency bands. Any one of the electronic devices 1 illustrated in FIG. 4 may be capable of supporting only one of the multiple frequency bands (multiple segments of frequency), for example, the 24 GHz, 77 GHz, 79 GHz, and 140 GHz bands. The electronic device 1 is "capable of supporting" a prescribed frequency band may mean that the electronic device 1 is capable of transmitting a transmission wave in the prescribed frequency band and receiving a reflected wave resulting from reflection of the transmission wave. The electronic device 1 is "capable of supporting" a prescribed frequency band may mean that the electronic device 1 is capable of detecting an object that reflects a transmission wave based on a transmission signal transmitted as a transmission wave and a reception signal received as a reflection wave.

The electronic device 1 according to the embodiment performs object detection by transmitting and receiving radio waves in one of the multiple segment frequency bands, and adds information about the noise power in that frequency band to sensing information and transmits the sensing information to the information processing apparatus 80. By receiving sensing information from each of the electronic devices 1 present at the different locations, the information processing apparatus 80 according to the embodiment can aggregate information about the noise power in prescribed frequency bands at each of the locations. Therefore, the information processing apparatus 80 according to the embodiment may transmit control information to an electronic device 1 that is performing object detection in a frequency band having relatively high noise power so as to control the electronic device 1 so that the electronic device 1 instead performs object detection in a frequency band having relatively low noise power. The information processing apparatus 80 according to the embodiment may also transmit control information to an electronic device 1 that is performing object detection in a frequency band having relatively low noise power so as to control the electronic device 1 so that the electronic device 1 continues performing object detection in that frequency band. Therefore, the electronic device 1 according to the embodiment is less likely to perform object detection in frequency bands where noise power is relatively high. Therefore, the electronic device 1 according to the embodiment is capable of reducing transmission wave interference. These operations are described in more detail below.

First, among operations performed by the electronic device 1 according to the embodiment, an operation of performing object detection by transmitting and receiving radio waves, and adding information about the noise power in the frequency band of the radio waves to the sensing information and transmitting the sensing information to the information processing apparatus 80 will be described.

When performing this operation, the electronic device 1 according to the embodiment may transmit function information of the host device to the information processing apparatus 80 in advance or at any time. The "function information" of the electronic device 1 may include, for example, information indicating whether or not the electronic device 1 has a function of changing the frequency of the radio waves with which object detection is performed in response to receiving control information from the information processing apparatus 80. When the electronic device 1 has such a function, the electronic device 1 can change the frequency of the radio waves with which object detection is performed in response to receiving control information from the information processing apparatus 80. On the other hand, when the electronic device 1 does not have such a function, the electronic device 1 is unable to change the frequency of the radio waves with which object detection is performed even if control information is received from the information processing apparatus 80. The "function information" of the electronic device 1 may further include, for example, information indicating the frequency bands to which the radio waves can be changed (i.e., that can be supported) when the electronic device 1 has a function of changing the frequency of the radio waves with which object detection is performed.

For example, the electronic device 1A illustrated in FIG. 4 is assumed to not have the function of being able to change the frequency of the radio waves with which object detection is performed. In this case, the electronic device 1A may transmit, to information processing apparatus 80, function information indicating that the electronic device 1A does not have the function of changing the frequency of the radio waves with which object detection is performed. This allows the information processing apparatus 80 to avoid a situation in which the information processing apparatus 80 transmits control information to the electronic device 1A in order to control the electronic device 1A so as to change the frequency of the radio waves. The electronic device 1B illustrated in FIG. 4 is assumed to have the function of changing the frequency of radio waves with which object detection is performed to the 77 GHz band and the 79 GHz band. In this case, the electronic device 1B may transmit, to the information processing apparatus 80, function information indicating that the electronic device 1B has the function of changing the frequency of radio waves with which object detection is performed to the 77 GHz band and the 79 GHz band. The electronic device 1C illustrated in FIG. 4 is assumed to have the function of changing the frequency of radio waves with which object detection is performed to the 24 GHz band, the 77 GHz band, the 79 GHz band, and the 140 GHz band. In this case, the electronic device 1C may transmit, to the information processing apparatus 80, function information indicating that the electronic device 1C has the function of changing the frequency of radio waves with which object detection is performed to the 24 GHz band, the 77 GHz band, the 79 GHz band, and the 140 GHz band. Such function information may be unique information in accordance the specifications of each electronic device 1. Each electronic device 1 may transmit such function information to the information processing apparatus 80 in advance or at any time.

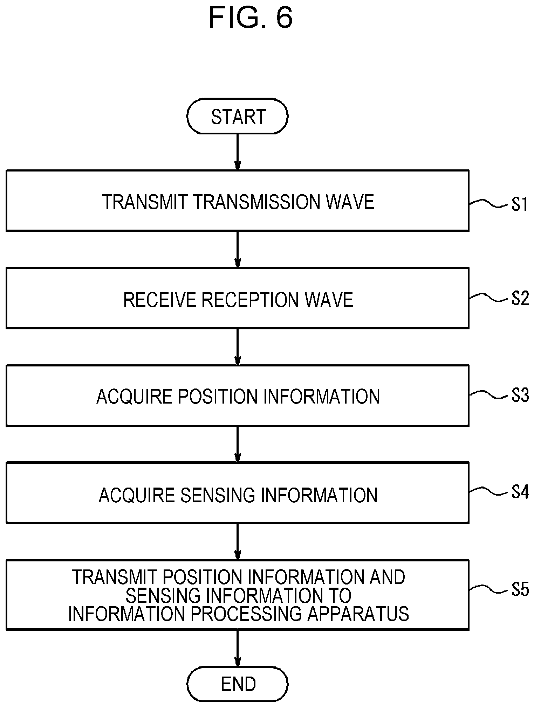

FIG. 6 is a flowchart for describing operations performed by the electronic device 1 in the system according to the embodiment. FIG. 6 describes the operation of the electronic device 1 up until the electronic device 1 transmits sensing information, which is based on the transmission signal and the reception signal at the position of the electronic device 1, to the information processing apparatus 80. When the operation illustrated in FIG. 6 is initiated, the electronic device 1 may be mounted on or in the mobile object 100, and the mobile object 100 may be traveling along a road or be stopped, for example. FIG. 6 may illustrate the operation performed by the electronic device 1 mounted on or in any of multiple mobile objects 100 as illustrated in FIG. 4.

When the operation illustrated in FIG. 6 starts, the electronic device 1 transmits a transmission wave from the transmission antenna 25 (Step S1). The transmission wave transmitted by the electronic device 1 in Step S1 may be, for example, the chirp signal described above. The electronic device 1 may transmit a transmission signal at a frequency in any of multiple segments as the transmission wave in Step S1. For example, in Step S1, the electronic device 1 may transmit a transmission signal at a frequency in one out of the 24 GHz, 77 GHz, 79 GHz, and 140 GHz bands.

After the transmission wave has been transmitted in Step S 1, the electronic device 1 receives a reflection wave from the reception antenna 31, the reflection wave having been generated by, for example, the transmission wave being reflected by an object (Step S2). As described above, a beat signal can be generated in the electronic device 1 based on the transmission signal and the reception signal. The electronic device 1 can determine the presence of an object that reflects the transmission wave (a reflective object) by performing distance FFT processing or other processing on the beat signal. In this way, the electronic device 1 is able to detect an object reflecting the transmission wave based on the transmission signal transmitted as a transmission wave and the reception signal received as a reflection wave resulting from reflection of the transmission wave.

Here, the electronic device 1 may determine the noise level (noise power) or detected object SNR (signal-to-noise ratio, signal quality), etc., of the signal based on the transmission signal and the reception signal, i.e., the noise level that is present when detecting an object. The "noise level or detected object SNR, etc." determined in this case represents the noise level or detected object SNR, etc. at the position of electronic device 1 at that time. Information such as the noise level or detected object SNR determined in this way may be temporarily stored in the storage, for example.

After receiving the reflection wave in Step S2, the electronic device 1 acquires information on the position of the host device (electronic device 1, sensor 5, or mobile object 100) from the position acquiring unit 60 (Step S3). In Step S3, the position acquiring unit 60 may acquire the position using a satellite positioning system such as GPS.

Once the position information has been acquired in Step S3, the electronic device 1 acquires sensing information based on the transmission signal and reception signal at the position of the electronic device 1 (Step S4). Here, the sensing information may be information related to the noise level or the detected object SNR (signal-to-noise ratio, signal quality), etc., of the signal based on the transmission signal and reception signal, as described in Step S2 above. The sensing information may include at least one of these pieces of information. In Step S4, the electronic device 1 may acquire sensing information stored in, for example, storage. The sensing information may relate to at least one out of the transmission signal and the reception signal. For example, the electronic device 1 may provide sensing information such as the strength of the reception signal and/or the noise distribution with respect to the frequency of the reception signal.

After acquiring the sensing information in Step S4, the electronic device 1 transmits the sensing information, together with the position information acquired in Step S3, to the information processing apparatus 80 (Step S5). In Step S5, the electronic device 1 may transmit the information from the communication unit 70 to the receiver 84 of the information processing apparatus 80. The operations illustrated in FIG. 6 may be repeated, for example, at a prescribed timing or at irregular intervals.

Thus, in the embodiment, the electronic device 1 transmits, to the information processing apparatus 80, sensing information based on a transmission signal transmitted at a frequency in one of multiple segments as a transmission wave and a reception signal received as a reflection wave. The control for performing transmission in this manner may be performed by the radar controller 10 and/or the ECU 50, for example. The sensing information may include information regarding the noise power present when detecting the object at the frequency of the transmission wave at the position of the electronic device 1.

As described above, FIG. 6 may illustrate the operation performed by the electronic device 1 mounted on or in any of the multiple mobile objects 100 illustrated in FIG. 4. In other words, the electronic devices 1 mounted on or in the multiple mobile objects 100 illustrated in FIG. 4 may each perform the operation illustrated in FIG. 6. In this way, the information processing apparatus 80 in the system according to the embodiment can collect sensing information for each position at each point in time via the electronic devices 1 that communicate with the information processing apparatus 80. In the system according to the embodiment, the information processing apparatus 80 can collect sensing information from any number of electronic devices 1. Thus, the information processing apparatus 80 can collect sensing information for various positions at each point in time.

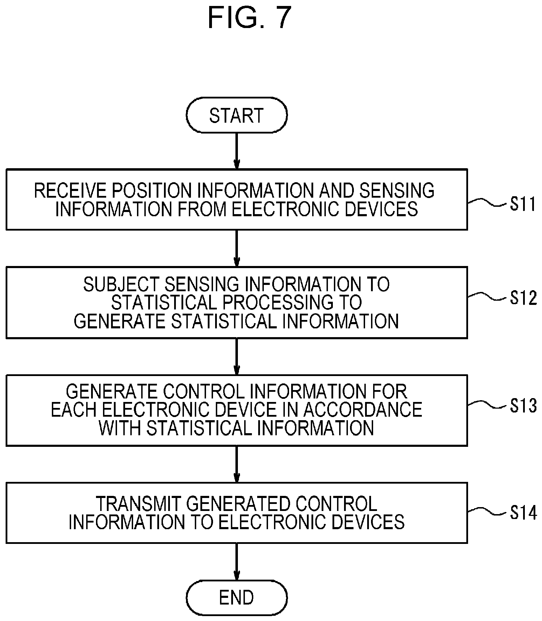

FIG. 7 is a flowchart for describing operations performed by the information processing apparatus 80 according to the embodiment. FIG. 7 describes the operation of the information processing apparatus 80 up until the information processing apparatus 80 transmits the results of processing information received from the electronic devices 1 to the electronic devices 1. When the operation illustrated in FIG. 7 begins, the information processing apparatus 80 is assumed to be able to communicate with at least one electronic device 1. FIG. 7 may illustrate the operation performed by the information processing apparatus 80 as illustrated in FIG. 4.

When the operation illustrated in FIG. 7 begins, the receiver 84 of the information processing apparatus 80 receives sensing information, together with the position information of the electronic device 1, from at least one electronic device 1 (Step S11). The sensing information received by the receiver 84 in Step S 11 may be sensing information based on the transmission signal and reception signal at the position of the at least one electronic device 1. In Step S11, the information processing apparatus 80 may receive position information and sensing information from any number of electronic devices 1. For example, the information processing apparatus 80 may receive position information and sensing information from a large number of electronic devices 1 mounted on or in the mobile objects 100 that are traveling or stopped at various locations. In Step S11, the information processing apparatus 80 may receive sensing information from an electronic device 1 that allows the frequency at which the transmission wave is transmitted to be variable in multiple segments. In Step S 11, the information processing apparatus 80 may receive sensing information from an electronic device 1 that does not allow the frequency at which the transmission wave is transmitted to be variable in multiple segments.

The position information and the sensing information of the electronic device 1 received by (the receiver 84 of) the information processing apparatus 80 in Step S11 may be the position information and the sensing information transmitted by (the communication unit 70 of) the electronic device 1 in Step S5 illustrated in FIG. 6. In other words, the sensing information received by the receiver 84 in Step S 11 may be information regarding the noise power present when detecting objects at the frequency of the transmission wave at the position of the electronic device 1.

The position information and the sensing information of the electronic device 1 received in Step S11 may be stored in the storage 88 or the like. In this case, the controller 82 may store sensing information at the position of the electronic device 1 in the storage 88 in association with the position information of the electronic device 1. In this way, the information processing apparatus 80 can accumulate respective pieces of position information and sensing information received from a large number of electronic devices 1 over a prescribed period of time. Therefore, the information processing apparatus 80 is able to construct a database of sensing information for each point in time at each position.

For example, the controller 82 may virtually divide a map of a certain region into a mesh of several meter square areas, for example, and then store, for each divided area, sensing information associated with the area in the storage 88. The virtually divided areas may be, for example, one meter square or several kilometers long, or have any other suitable size. The shape of the virtually divided areas is not limited to a mesh shape, and may be any shape, such as a triangular or honeycomb shape. The controller 82 may also store sensing information for the positions associated with the areas in the storage 88 at prescribed time intervals. For example, the controller 82 may store sensing information in the storage 88 for a position X1 (or area X1) at prescribed time intervals, such as every minute, every 3 minutes, every 5 minutes, every 10 minutes, or every 30 minutes. For example, the controller 82 may store sensing information in the storage 88 for every hour for the position X1 (or area X1), such as from 6:00 AM to 7:00 AM, from 7:00 AM to 8:00 AM, from 8:00 AM to 9:00 AM, and so on. For example, the controller 82 may store sensing information in the storage 88 for a position X2 (or area X2), for a position X3 (or area X3), and so on, for every hour as described above.

For each position (or area), the controller 82 may store sensing information in the storage 88 for each prescribed peak time period and/or each prescribed idle time period, rather than for every hour. In addition, the controller 82 may store sensing information in the storage 88 for each position (or area), for example, for each day of the week, each day of the month, or each month. For each position (or area), the controller 82 may store sensing information in the storage 88 for each season, for example, spring, summer, fall, or winter. In addition, the controller 82 may store sensing information in the storage 88 according to weather (i.e., sunny or rainy weather) for each position (or area). Alternatively, the controller 82 may store sensing information in the storage 88 for each condition or situation.

Upon receiving the position information and the sensing information of the electronic device 1 in Step S11, the controller 82 of the information processing apparatus 80 performs statistical processing on the sensing information (Step S12). The statistical processing of sensing information performed by the controller 82 in Step S12 may be, for example, processing for calculating an average value. For example, in Step S12, the controller 82 may calculate the average value of sensing information for each position (or area) for each time period as described above. The information resulting from the sensing information being subjected to statistically processing by the controller 82 in Step S12 is hereinafter referred to as "statistical information". For example, if the sensing information is information about the noise level when detecting objects at the frequency of the transmission wave at the position of the electronic device 1, the statistical information would represent the average noise level for that time period at that position when using that frequency. Other than processing for calculating the mean value, processing for calculating the median or mode and so on may be used as the statistical processing performed on the sensing information by the controller 82.

Once the statistical information has been generated in Step S12, the controller 82 generates control information for each electronic device 1 (Step S13). The control information may include information used to control the frequency at which the electronic device 1 transmits the transmission wave to any one of multiple segments.

For example, let us suppose that electronic device 1C illustrated in FIG. 4 has been performing object detection by transmitting and receiving radio waves in the 77 GHz frequency band at position X1 (or area X1). Then, suppose that according to the statistical information generated by information processing apparatus 80 in Step S12, for example, the noise power in the 77 GHz band is relatively large at position X1 (or area X1). In this case, the controller 82 may generate control information in order that radio waves of a frequency in a segment other than the 77 GHz band (for example, the 140 GHz band) are transmitted and received at position X1 (or area X1), for example (Step S13).

For example, let us suppose that the electronic device 1C illustrated in FIG. 4 has been performing object detection by transmitting and receiving radio waves in the 77 GHz frequency band at position X1 (or area X1). Then, suppose that according to the statistical information generated by information processing apparatus 80 in Step S12, for example, the noise power in the 77 GHz band is relatively small at position X1 (or area X1). In this case, the controller 82 may, for example, generate control information in order to maintain transmission and reception of radio waves in the 77 GHz band at position X1 (or area X1) (Step S13).

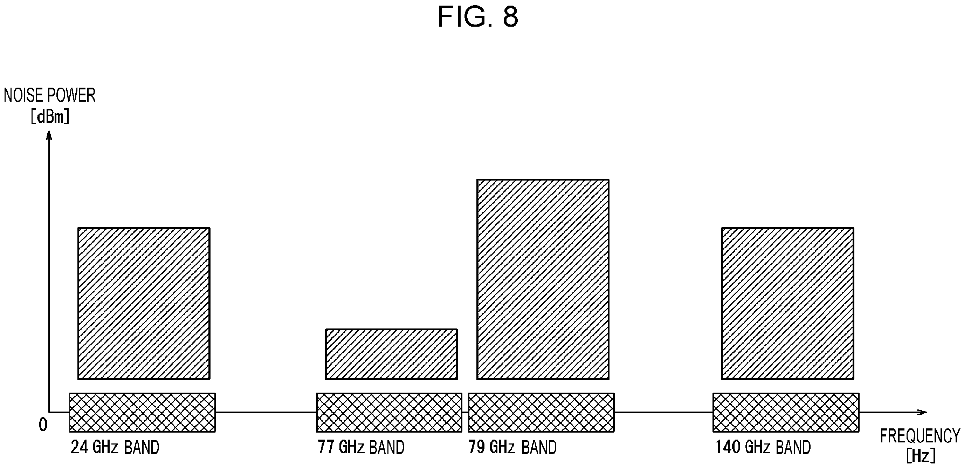

FIG. 8 illustrates an example of the noise power in radio frequency segments at which the electronic device 1 of the embodiment transmits and/or receives radio waves at a certain position. In FIG. 8, the horizontal axis represents the frequency of the transmitted and/or received radio waves, and the vertical axis represents the noise power at each frequency.

As illustrated in FIG. 8, the electronic device 1 according to the embodiment may divide the frequency band into four segments, for example, the 24 GHz band, the 77 GHz band, the 79 GHz band, and the 140 GHz band in order to enable transmission and/or reception of radio waves. In the electronic device 1 according to the embodiment, the noise power measuring unit 37 can measure the noise power in each of the four segments illustrated in FIG. 8 when radio waves are received in the four segments.

Let us suppose that the noise power measuring unit 37 measured the noise power in the four segments from the 24 GHz band to the 140 GHz band, and the noise power in the segment of the 77 GHz band was the lowest, as illustrated in FIG. 8. As illustrated in FIG. 8, let us also suppose that the noise power in the 24 GHz segment and the 140 GHz segment was higher than the noise power in the 77 GHz segment and lower than the noise power in the 79 GHz segment. As illustrated in FIG. 8, let us suppose that the noise power in the 79 GHz segment was the highest among the four segments from the 24 GHz band to the 140 GHz band. The information about the noise power in each segment measured by the noise power measuring unit 37 is transmitted to the information processing apparatus 80 by being included in the sensing information.

As illustrated in FIG. 8, the risk of radio waves interfering with each other increases when the number of electronic devices 1 transmitting and receiving radio waves using frequencies in the 79 GHz band, for example, where noise power is relatively high, increases at the position of the electronic device 1 measuring noise power. In such a situation, the accuracy with which the electronic device 1 will detect an object can be expected to deteriorate. Therefore, for example, in the situation illustrated in FIG. 8, the number of electronic devices 1 transmitting and receiving radio waves using the 79 GHz frequency is preferably not increased from the current number. In the situation illustrated in FIG. 8, at least one of the electronic devices 1 that transmits and receives radio waves using frequencies in the 79 GHz band may transmit and receive radio waves using frequencies outside the 79 GHz band. In other words, the frequency of the radio waves transmitted and received by at least one of the electronic devices 1 that transmit and receive radio waves using frequencies in the 79 GHz band may be changed. In this case, for example, in the situation illustrated in FIG. 8, the number of electronic devices 1 transmitting and receiving radio waves using frequencies in the 77 GHz band, where the noise power is relatively low, may be increased.

As described above, the controller 82 of the information processing apparatus 80 may perform control so that a relatively large number of electronic devices 1 transmit and receive radio waves in a prescribed frequency band at positions where the noise power in the prescribed frequency band is relatively low. On the other hand, the controller 82 of the information processing apparatus 80 may perform control so that a relatively small number of electronic devices 1 transmit and receive radio waves in a prescribed frequency band at positions where the noise power in the prescribed frequency band is relatively high.

When radio waves are transmitted and received in multiple segments of a frequency band, the controller 82 of the information processing apparatus 80 may increase the number of electronic devices 1 that detect objects at the frequency of the transmission wave in segments having smaller noise powers among the multiple segments of frequency. When radio waves are transmitted and received in multiple segments of a frequency band, the controller 82 of the information processing apparatus 80 may maximize the number of electronic devices 1 that detect objects at the frequency of the transmission wave in the segment having the smallest noise power among the multiple segments of frequency.

On the other hand, when radio waves are transmitted and received in multiple segments of a frequency band, the controller 82 of the information processing apparatus 80 may decrease the number of electronic devices 1 that detect objects at the frequency of the transmission wave in segments having larger noise powers among the multiple segments of frequency. When radio waves are transmitted and received in multiple segments of a frequency band, the controller 82 of the information processing apparatus 80 may minimize the number of electronic devices that detect objects at the frequency of the transmission wave in the segment having the largest noise power among the multiple segments of frequency.

Once the control information has been generated in Step S13 in FIG. 7, the controller 82 of the information processing apparatus 80 transmits the generated control information to the electronic device 1 (Step S14). In Step S14, the controller 82 may transmit the control information for a prescribed position generated in accordance with the statistical information to the electronic device 1 located at or near the prescribed position. In Step S14, the controller 82 may send back to the electronic device 1 that transmitted the sensing information, the control information generated using the statistical information based on the sensing information. In Step S14, the controller 82 may transmit control information only to the electronic devices 1 that have transmitted function information indicating that they have the function of changing the frequency of radio waves used to perform object detection. Furthermore, in Step S14, the controller 82 may transmit control information to the electronic devices 1 only in the case where the function information indicates that the electronic devices 1 are able to support frequency control based on the control information.

The operations illustrated in FIG. 7 may be repeated, for example, at a prescribed timing or at irregular intervals. In this way, the statistical information and the control information can be updated to the latest content.

Thus, in an embodiment, the information processing apparatus 80 communicates with the electronic devices 1. Each electronic device 1 detects an object reflecting a transmission wave based on a transmission signal transmitted as the transmission wave and a reception signal received as a reflection wave resulting from reflection of the transmission wave. Each electronic device 1 may allow the frequency at which the transmission wave is transmitted to be variable in multiple segments. The information processing apparatus 80 according to the embodiment includes the receiver 84, the controller 82, and the transmitter 86. The receiver 84 receives, along with position information of the electronic device 1, sensing information based on the transmission signal transmitted as a transmission wave and the reception signal received as a reflection wave from the electronic device 1. The controller 82 performs statistical processing on the sensing information at the position of the electronic device 1 in order to generate statistical information, and generates control information, which will be used to control the electronic device 1, in accordance with the statistical information. The transmitter 86 transmits the control information generated by the controller 82 to the electronic device 1.

The sensing information may also include information regarding the noise power at the time when detection of an object at the frequency of the transmission wave is performed at the position of the electronic device 1. The control information may also include information used to control the frequency at which the electronic device 1 transmits the transmission wave to any one of multiple segments.

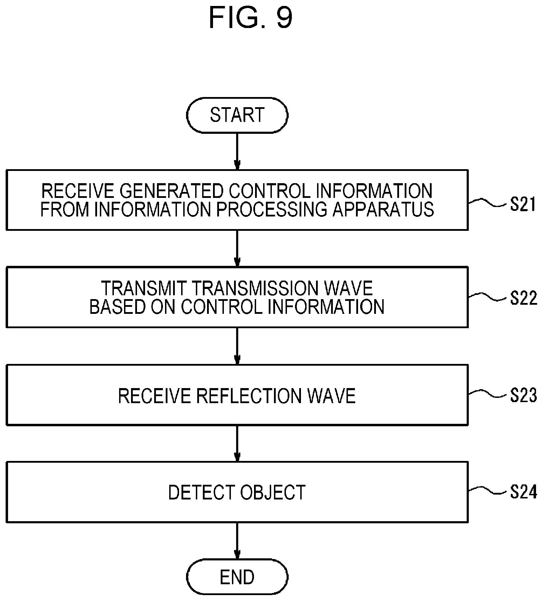

FIG. 9 is a flowchart for describing operations performed by the electronic device 1 in the system according to the embodiment. FIG. 9 may be used as a flowchart describing the operations performed by the electronic device 1 after the information processing apparatus 80 has performed the operations illustrated in FIG. 7 in the system according to the embodiment. FIG. 9 describes the operations in which the electronic device 1 receives the generated control information from the information processing apparatus 80 and detects an object based on the generated control information. FIG. 9 may illustrate operations performed by the electronic device 1 mounted on or in the mobile object 100 as illustrated in FIG. 4. When the operation illustrated in FIG. 9 is initiated, at least one electronic device 1 is assumed to be in a state in which the electronic device 1 can communicate with the information processing apparatus 80. The electronic device 1 referred to below is assumed to allow the frequency at which the transmission wave is transmitted to be variable in multiple segments.

When the operation illustrated in FIG. 9 begins, the communication unit 70 of the electronic device 1 receives the generated control information from the transmitter 86 of the information processing apparatus 80 (Step S21). The control information received by the communication unit 70 in Step S21 may be the control information transmitted by the information processing apparatus 80 in Step S14 illustrated in FIG. 7. In Step S21, the electronic device 1 may receive the control information generated for the position (or area) of the electronic device 1. In Step S21, the electronic device 1 may receive the control information generated for the time period including the current time.

Upon receiving the control information in Step S21, the radar controller 10 of the electronic device 1 transmits a transmission wave based on the control information from the transmission antenna 25 (Step S22). In Step S22, the radar controller 10 may transmit the transmission wave from the transmission antenna 25 at a frequency based on the control information received from the information processing apparatus 80. For example, if the control information includes information about control for transmitting a transmission wave of another frequency different from the frequency at which transmission has been performed so far, the radar controller 10 may transmit a transmission wave of that other frequency from the transmission antenna 25. If, for example, the control information includes information about control for maintaining the frequency at which transmission has been performed so far, the radar controller 10 may transmit a transmission waves of that frequency from the transmission antenna 25. Alternatively, the operation illustrated in Step S22 may be performed in substantially the same manner as the operation in Step S1 illustrated in FIG. 6.

After the transmission wave has been transmitted in Step S22, the electronic device 1 receives a reflection wave from the reception antenna 31, the reflection wave having been generated by, for example, the transmission wave being reflected by an object (Step S23). The operation illustrated in Step S23 may be performed in substantially the same manner as the operation in Step S2 illustrated in FIG. 6.

Once the reflection wave has been received in Step S23, the electronic device 1 detects an object reflecting the transmission wave based on the transmission signal and reception signal (Step S24). The operations illustrated in FIG. 9 may be repeated, for example, at a prescribed timing or at irregular intervals.

In this way, in the embodiment, each electronic device 1 may allow the frequency at which the transmission wave is transmitted to be variable in multiple segments. The electronic device 1 detects an object reflecting a transmission wave based on a transmission signal transmitted as the transmission wave and a reception signal received as the reflection wave. The electronic device 1 may transmit a transmission wave from the transmission antenna 25 at a frequency based on the control information received from the information processing apparatus 80. Such control may be performed by the radar controller 10 and/or ECU 50, for example. Here, the control information may include information about control in which the transmission wave is transmitted at a frequency in any of the multiple segments.

Thus, in the electronic device 1 according to the embodiment, the frequency of the radio waves used by the electronic device 1 to perform object detection is set based on information supplied from the information processing apparatus 80. When the noise power in the frequency band of the radio waves used by the electronic device 1 is relatively large, the information processing apparatus 80 according to the embodiment transmits control information to instruct the electronic device 1 to use radio waves in another frequency band. Therefore, according to the electronic device 1 and the information processing apparatus 80 of the embodiment, transmission waves are less likely to interfere with each other.

In the embodiment described above, the electronic device 1 is described as being capable of supporting multiple segments of frequency, for example, the 24 GHz band, the 77 GHz band, the 79 GHz band, and the 140 GHz band. This type of operation performed by the electronic device 1 can also be referred to as an inter-band operation for convenience. On the other hand, the electronic device 1 may be capable of supporting multiple segments of a particular frequency band, such as the 24 GHz band for example. This type of operation performed by the electronic device 1 can also be referred to as an intra-band or in-band operation for convenience. Furthermore, in the electronic device 1, the multiple segments of frequency at which a transmission wave is transmitted may belong to any of multiple different frequency bands and may be segments obtained by dividing any of the multiple different frequency bands. This type of operation performed by the electronic device 1 can also be described as a hybrid operation of intraband operation and interband operation for convenience.

The present disclosure has been described based on the drawings and examples, but it should be noted that a variety of variations and amendments may be easily made by one skilled in the art based on the present disclosure. Therefore, it should be noted that such variations and amendments are included within the scope of the present disclosure. For example, the functions included in each functional part can be rearranged in a logically consistent manner. Multiple functional parts and so forth may be combined into a single part or divided into multiple parts. Further, each embodiment according to the present disclosure described above does not need to be implemented exactly as described in the embodiment, and may be implemented with features having been combined or omitted as appropriate. A variety of variations and amendments to the content of the present disclosure can be made by one skilled in the art based on the present disclosure. Accordingly, such variations and amendments are included in the scope of the present disclosure. For example, each functional unit, each method, each step, or the like in each embodiment can be added to another embodiment or replaced by a functional unit, a method, a step, or the like in another embodiment as long as logical consistency is maintained. In each embodiment, a plurality of each functional part, each means, each step, and so on can be combined into a single functional part, means, or step or divided into multiple functional parts, means, or steps. Each of the above-described embodiments of the present disclosure is not limited to faithful implementation of each of the described embodiments, and may be implemented by combining or omitting some of the features as appropriate.

The embodiments described above are not limited to only being implemented as the electronic device 1 and the information processing apparatus 80. For example, the embodiments described above may be implemented as a method of controlling equipment such as the electronic device 1 and/or the information processing apparatus 80. For example, the embodiments described above may be implemented as a program executed by equipment such as the electronic device 1 and/or the information processing apparatus 80.

As described above, in the electronic device according to each embodiment, multiple segments of frequency at which a transmission wave is transmitted may be included in at least one out of the 24 GHz band, the 77 GHz band, the 79 GHz band, and the 140 GHz band. However, in the electronic device according to each embodiment, the multiple segments of frequency at which a transmission wave is transmitted may be included in a frequency band other than the above-mentioned frequency bands.

### REFERENCE SIGNS

- 1: electronic device
- 10: radar controller
- 12: frequency synthesizer
- 20: transmitter
- 21: transmission signal generator
- 22: DAC
- 23: transmission antenna
- 30: receiver
- 31: reception antenna
- 32: ADC
- 33: distance estimator
- 34: velocity estimator
- 35: angle estimator
- 36: clustering-tracking processor
- 37: noise power measuring unit
- 40: analog front end

## Claims

1. An electronic device comprising:
a transmission antenna configured to transmit a transmission wave; and
a reception antenna configured to receive a reflection wave generated by reflection of the transmission wave,
wherein the electronic device allows a frequency at which the transmission wave is transmitted to be variable in multiple segments, and detects an object that reflects the transmission wave based on a transmission signal transmitted as the transmission wave and a reception signal received as the reflection wave, and
the electronic device transmits sensing information to an information processing apparatus together with position information of the electronic device, the sensing information being based on the transmission signal transmitted at a frequency in any of the multiple segments as the transmission wave and the reception signal received as the reflection wave.

2. The electronic device according to claim 1, wherein the sensing information includes information about noise power for when detection of an object is performed at a position of the electronic device.

3. An electronic device comprising:
a transmission antenna configured to transmit a transmission wave; and
a reception antenna configured to receive a reflection wave generated by reflection of the transmission wave,
wherein the electronic device allows a frequency at which the transmission wave is transmitted to be variable in multiple segments, and detects an object that reflects the transmission wave based on a transmission signal transmitted as the transmission wave and a reception signal received as the reflection wave, and
the electronic device transmits the transmission wave from the transmission antenna at a frequency based on control information received from an information processing apparatus.

4. The electronic device according to claim 3, wherein the control information includes information about control in which the transmission wave is transmitted at a frequency in any of the multiple segments.

5. An information processing apparatus configured to communicate with an electronic device, the electronic device configured to detect an object that reflects a transmission wave based on a transmission signal transmitted as the transmission wave and a reception signal received as a reflection wave generated by reflection of the transmission wave, the information processing apparatus comprising:
a receiver configured to receive, together with position information of the electronic device, sensing information based on the transmission signal transmitted as the transmission wave and the reception signal received as the reflection wave from the electronic device;
a controller configured to generate statistical information by performing statistical processing on the sensing information at a position of the electronic device and generate, in accordance with the statistical information, control information with which the electronic device is controlled; and
a transmitter configured to transmit the control information generated by the controller to the electronic device.

6. The information processing apparatus according to claim 5, wherein the sensing information includes information about noise power for when detection of an object is performed at a position of the electronic device.

7. The information processing apparatus according to claim 5 or 6, wherein the control information includes information about controlling a frequency at which the electronic device transmits the transmission wave.

8. The information processing apparatus according to claim 6 or 7, wherein the information processing apparatus sets a number of the electronic devices that detect an object at a frequency of the transmission wave to be larger in segments having a smaller noise power, among the multiple segments of frequency.

9. The information processing apparatus according to claim 6 or 7, wherein the information processing apparatus sets a number of the electronic devices that detect an object at a frequency of the transmission wave to be largest in a segment having a smallest noise power, among the multiple segments of frequency.

10. The information processing apparatus according to claim 6 or 7, wherein the information processing apparatus sets a number of the electronic devices that detect an object at a frequency of the transmission wave to be smaller in segments having a larger noise power, among the multiple segments of frequency.

11. The information processing apparatus according to claim 6 or 7, wherein the information processing apparatus sets a number of the electronic devices that detect an object at a frequency of the transmission wave to be smallest in a segment having a largest noise power, among the multiple segments of frequency.

12. An electronic device control method comprising:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting sensing information based on the transmission signal transmitted at a frequency in any of the multiple segments as the transmission wave and the reception signal received as the reflection wave to an information processing apparatus together with position information of the electronic device.

13. An electronic device control method comprising:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting the transmission wave from the transmission antenna at a frequency based on control information received from an information processing apparatus.

14. A method of controlling an information processing apparatus configured to communicate with an electronic device, the electronic device configured to detect an object that reflects a transmission wave based on a transmission signal transmitted as the transmission wave and a reception signal received as a reflection wave generated by reflection of the transmission wave, the method comprising:
receiving, together with position information of the electronic device, sensing information based on the transmission signal transmitted as the transmission wave and the reception signal received as the reflection wave from the electronic device;
generating statistical information by performing statistical processing on the sensing information at a position of the electronic device and generating, in accordance with the statistical information, control information with which the electronic device is controlled; and
transmitting the control information generated by the controller to the electronic device.

15. A program configured to cause an electronic device to perform:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave based on a transmission signal transmitted as the transmission wave and a reception signal received as the reflection wave; and
transmitting sensing information to an information processing apparatus together with position information of the electronic device, the sensing information being based on the transmission signal transmitted at a frequency in any of the multiple segments as the transmission wave and the reception signal received as the reflection wave.

16. A program configured to cause an electronic device to perform:
transmitting a transmission wave using a transmission antenna;
receiving a reflection wave generated by reflection of the transmission wave using a reception antenna;
allowing a frequency at which the transmission wave is transmitted to be variable in multiple segments and detecting an object that reflects the transmission wave using an electronic device based on a transmission signal transmitted as the transmission wave and a reception signal received as the reflection wave; and
transmitting the transmission wave from the transmission antenna at a frequency based on control information received from an information processing apparatus.

17. A program for an information processing apparatus, the information processing apparatus configured to communicate with an electronic device, the electronic device configured to detect an object that reflects a transmission wave based on a transmission signal transmitted as the transmission wave and a reception signal received as a reflection wave generated by reflection of the transmission wave, the program configured to cause the information processing apparatus to perform:
receiving, together with position information of the electronic device, sensing information based on the transmission signal transmitted as the transmission wave and the reception signal received as the reflection wave from the electronic device;
generating statistical information by performing statistical processing on the sensing information at a position of the electronic device and generating, in accordance with the statistical information, control information with which the electronic device is controlled; and
transmitting the control information generated by the controller to the electronic device.
